# EUROPEAN PATENT SPECIFICATION

(11) **EP 2 173 794 B1**
(45) Date of publication and mention of the grant of the patent: **22.01.2014**
(21) Application number: 08781726.8
(22) Date of filing: 11.07.2008
(51) Int. Cl.: C08J 5/18, C08L 23/00, C08L 23/06

(54) **POLYETHYLENE FILMS**
POLYETHYLENFILME
FILMS DE POLYÉTHYLÈNE

(30) Priority: 30.07.2007 US 830416
(43) Date of publication of application: 14.04.2010
(73) Proprietor: Fina Technology, Inc., Houston, TX 77167 (US)
(72) Inventor: MCLEOD, Michael, Kemah, Texas 77565-8135 (US)
(74) Representative: Leyder, Francis
(86) International application number: PCT/US2008/069844
(87) International publication number: WO 2009/017955

(56) References cited:
- WO-A1-01/40325
- US-A- 5 145 728
- US-A1- 2007 100 053
- TOTAL: "HDPE 9458", 20060501, 1 May 2006 (2006-05-01), page 1, XP007919715,

## Description

### FIELD

The present invention relates to polyethylene films, and to processes for making films. in particular the invention relates to solid state stretched films that may be monoaxially or biaxially oriented. The processes can tolerate high draw ratios and lower extrusion pressures and amperes while producing films having high tensile strength and modulus as well as low shrinkage.

### BACKGROUND

Processes for making solid state stretched films are well known. Generally, a polymer masterbatch is heated and then extruded, cast or blown to form a film with essentially no orientation. The film is water or air quenched thereby returning the film to a solid state. Stretching or orientation of the solid film in either one or two directions is accomplished by heating the film to a temperature at or above the glass-transition temperature of the polymer but below its crystalline melting point, and then stretching the film quickly.

Orienting the film provides a glossier and clearer film, a smoother surface, and increased tenacity. Polyethylene, particularly high density polyethylene, is particularly difficult to process in this manner. For example, a phenonmenon called slubbing can occur where the stretching is uneven. It is also often difficult to obtain high draw ratios over a broad temperature range.

The prior art has proposed a number of solutions to address the difficulties experienced with solid state stretching of high density polyethylene. Examples include blending the polyethylene with a wax or with another polymer. These approaches, however, add significant production cost.

### SUMMARY

One embodiment of the invention is solid state stretched film comprising polyethylene having a density ranging from greater than 0.940 g/cc to less than 0.960 g/cc; a molecular weight distribution (Mw/Mn) 10 or greater; a melt flow index ranging from 0.30 to 1.00 dg/min; and a weight average molecular weight (Mw) of 300,000 g/mol or less.

Another embodiment is solid state stretched film comprising a layer made from polyethylene having a density ranging from greater than 0.940 g/cc to less than 0.960 g/cc; a molecular weight distribution (Mw/Mn) 10 or greater; a melt flow index ranging from 0.30 to 1.00 dg/min; and a weight average molecular weight (Mw) of 300,000 g/mol or less.

A further embodiment is a process for producing a solid state stretched, oriented film comprising: preparing a masterbatch comprising polyethylene having a density ranging from greater than 0.940 g/cc to less than 0.960 g/cc; a molecular weight distribution (Mw/Mn) 10 or greater; a melt flow index ranging from 0.30 to 1.00 dg/min; and a weight average molecular weight (Mw) of 300,000 g/mol or less; heating and extruding the polymer melt in one direction to form a film; and then stretching the film using heat to thereby orient the film in the same direction. Optionally, the film may then be oriented in the opposite direction.

In any of these embodiments, the film may be one of a plurality of layers and/or may be laminated.

Unless specifically indicated otherwise, in any of the embodiments described herein, the film may be monoaxially or biaxially oriented.

In any of these embodiments the polyethylene molecular weight may be 250,000 g/mol or less, or 200,000 g/mol or less; the molecular weight distribution may be between 10 and 20; and the melt flow index may be between 0.20 dg/min and 0.50 dg/min.

In any of these embodiments, the film, polyethylene, or masterbatch, may be substantially free of cavitations caused by calcium carbonate, and/or substantially free of crosslinkages, and/or substantially free of wax, (including hydrocarbon and micro-crystalline wax).

Methods for making these polymers are generally well known in the art and include slurry and gas phase processes in various types of reactors, under various conditions. Ziegler-Natta catalysts and methods for their use are well known as are metallocene and Chromium based catalysts and methods for their use.

The present invention relates to the following solid state stretched film :
A1. A solid state stretched film comprising polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less.
A2. The film of A1, wherein said polyethylene is disposed in one of a plurality of layers.
A3. The film of A1, wherein the film is monoaxially oriented.
A4. The film of A1, wherein the polyethylene molecular weight is 250,000 g/mol or less.
A5. The film of A1, wherein the polyethylene molecular weight is 200,000 g/mol or less.
A6. The film of A1, wherein the polyethylene molecular weight distribution is between 10 and 20.
A7. The film of A1, wherein the polyethylene melt flow index is between 0.20 dg/min and 0.50 dg/min.
A8. The film of A1, wherein the polyethylene is substantially free of cavitations caused by calcium carbonate.
A9. The film of A1, wherein the polyethylene is substantially free of crosslinkages.
A10. The film of A1, wherein the polyethylene is substantially free of hydrocarbon wax.

The present invention also relates to the following solid state stretched film :
B1. A solid state stretched film comprising a layer made from polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less.
B2. The film of B1, wherein the film is biaxially oriented.
B3. The film of B1, wherein the film is monoaxially oriented.
B4. The film of B I, wherein the polyethylene molecular weight is 250,000 g/mol or less.
B5. The film of B1, wherein the polyethylene molecular weight is 200,000 g/mol or less.
B6. The film of B1, wherein the polyethylene molecular weight distribution is between 10 and 20.
B7. The film of B1, wherein the polyethylene melt flow index is between 0.20 dg/min and 0.50 dg/min.
B8. The film of B1, wherein the polyethylene layer is substantially free of cavitations caused by calcium carbonate.
B9. The film of B1, wherein the polyethylene layer is substantially free of crosslinkages.
B10. The film of B1, wherein the polyethylene is substantially free of hydrocarbon wax.

The present invention also relates to the following tape or filament:
C1. A tape or filament prepared from the film of A1.

The present invention also relates to the following tape or filament:
D1. A tape or filament prepared from the film of B1.

Finally, the present invention relates to the following process:
E1. A process for producing a solid state stretched, oriented film comprising:
   preparing a masterbatch comprising polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less;
   heating and extruding the polymer melt in one direction to form a film; and then stretching the film using heat to thereby orient the film in the same direction.
E2. The process of E1, wherein the film comprises two or more layers.
E3. The process of E1 further comprising orienting the film in the opposite direction thereby obtaining a biaxially oriented film.
E4. The process of E1, wherein the polyethylene molecular weight is 250,000 g/mol or less.
E5. The process of E1, wherein the polyethylene molecular weight is 200,000 g/mol or less.
E6. The process of E1, wherein the polyethylene molecular weight distribution is between 10 and 20.
E7. The process of E1, wherein the polyethylene melt flow index is between 0.20 dg/min and 0.50 dg/min.
E8. The process of E1, wherein the masterbatch is substantially free of calcium carbonate.
E9. The process of E1, wherein the masterbatch is substantially free of polymerizable monomer.
E10. The process of E1, wherein the masterbatch is substantially free of hydrocarbon wax.

### BRIEF DESCRIPTION OF THE DRAWINGS

Fig. 1 is a graph of complex viscosity vs. frequency for comparative vs. experimental polymer.
Fig. 2 is a graph of extruder amperes at varying throughputs (draw ratios) for comparative vs. experimental polymer.
Fig. 3 is a graph of extruder pressures at varying throughputs.
Fig. 4 is a graph of modulus at 5% elongation vs. draw ratio.
Fig. 5 is a graph of maximum tenacity vs. draw ratio.

### DESCRIPTION

Embodiments of the inventions will now be described in greater detail below, including specific embodiments, versions and examples, but the inventions are not limited to these embodiments, versions or examples, which are included to enable a person having ordinary skill in the art to make and use the inventions when the information is combined with available information and technology.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, each numerical parameter should at least be construed in light of the number of reported significant digits and by applying ordinary rounding techniques. Further, the ranges stated in this disclosure and the claims are intended to include the entire range specifically and not just the endpoint(s). For example, a range stated to be 0 to 10 is intended to disclose all whole numbers between 0 and 10 such as, for example 1, 2, 3, 4, etc., all fractional numbers between 0 and 10, for example 1.5, 2.3, 4.57, 6.113 etc., and the endpoints 0 and 10. Also, a range associated with chemical substituent groups such as, for example, "C₁ to C₅ hydrocarbons," is intended to specifically include and disclose C₁ and C₅ hydroxarbons as well as C₂, C₃, and C₄ hydrocarbons.

Not with standing that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Further as used in the specification and the appended claims the singular forms "a," "an," and "the" include their plural referents unless the context clearly dictates otherwise. For example, references to an "extruder," or a polymer," are intended to include the one or more extruders or polymers unless otherwise stated. Likewise, reference to a composition or process containing or including "an" ingredient or "a" step is intended to include other ingredients or other steps, respectfully, in addition to the one named unless otherwise stated.

As defined herein, a solid state stretched film" is one that has been oriented in at least one direction subsequent to at least a quenching and a casting/extrading step. This excludes blown film.

The polyethylene described herein can be a homopolymer or copolymer containing an ethylene content of from about 90 to about 100 mol %, with the balance, if any, being made up of C₃-C₃ alpha olefins, for example. In one embodiment it is unimodal.

The polyethylene referred to herein has a density ranging from greater than 0.940 g/cc to less than 0.960 g/cc (density is determined per ASTM D792) In another embodiment the density ranges from 0.950 to 0.960 g/cc.

The polyethylene referred to herein has a molecular weight distribution (Mw/Mn) of 10 or greater. In another embodiment the molecular weight distribution ranges from 10 to 20, or from 10 to 15 (MWD = Mw/Mn as determined by GPC).

The polyethylene described herein has a melt flow index ranging from 0.30 to 1.00 dg/min (MI2: measured according to ASTM D-1238; 190°C/2.16kg). Another embodiment includes melt flow index ranges of from 0.30 dg/min to 0.75 dg/min.

The weight average molecular weight of the polyethylene is less than 300,000, or from 300,000 to 100,000. In another embodiment, the weight average molecular weight ranges from 100,000 to 250,000, or from 100,000 to 200,000.

The polyethylene may also be compounded with one or more other additives as is prior to extrusion. These include one or more of the following non-limiting examples: antioxidants, low molecular weight resin (Mw less than about 10,000 Daltons as described in USPN 6,969,740), calcium stearate, heat stabilizers, lubricants, slip/anti-block agents, mica, talc, silica, calcium carbonate, weather stabilizers, Viton GB, Viton SC, Dynamar, elastomers, fluoroelastomers, any fluoropolymers, etc.

In one embodiment, the polyethylene is substantially free of cavitations caused by calcium carbonate or any other cavitating agent, such as is described in U.S. Patent No. 6,828,013 for example.

In another embodiment, the polyethylene (and/or subsequent film) is substantially free of crosslinkages such as is described in U.S. Patent No. 6,241,937, for example.

In another embodiment, the polyethylene is substantially free of wax such as is described in U.S. Patent Nos. 6,887,923, and 4,870,122, for example.

Any two or more of the above-described film-layer or film embodiments may be combined.

The films of the invention may be single or multi-layer films. For multilayered films, the additional layers may be made from any other material, for example homopolymers or copolymers such as propylene-butene copolymer, poly(butene-1), sytrene-acrylonitrile resin, acrylonitrile-butadiene-styrene resin, polypropylene, ethylene vynil acetate resin, polyvinylchloride resin, poly(4-methyl-1-pentene), any low density polyethylene, and the like. Multilayer films of the invention may be formed using techniques and apparatus generally well known by one of the skill in the arts, such as, for example co-extrusion, and lamination processes.

The films of this invention are particularly useful in monofilament, slit tape, and fabric applications as well as specialty film applications. Specialty film applications include biaxially oriented films and machine direction oriented (MDO) films. Such films have increased stiffness, increased strength, decreased permeability, and better optocal properties (lower baze and higher gloss).

### EXAMPLES

Two polyethylene were evaluated for their processing and properties in a solid-state stretching process, drawn tape production One resin was 7208, a current commercial Total Petrochemicals grade that has common commercial use in solid-state stretching processes like tape and monofilament. The second product was a version of 9458 (another Total Petrichemicals commercial grade) compounded with the same additive package as 7208. Both resins were compounded in the applications lab on the same equipment. Details regarding both resins are presented in Table 1

**Table 1. Properties of 7208 and 9458.**

| **Resi** | **7208** | **9458** |
|---|---|---|
| Mn | 2019 | 1225 |
| Mw | 15606 | 17457 |
| Mz | 97168 | 116232 |
| Peak MW | 6159 | 5688 |
| Polydispersity | 7.7 | 14.3 |
| MI2 | 0.49 | 0.46 |
| HLMI | 21.1 | 34.3 |
| HLMI/MI | 43.1 | 74.6 |
| Crystallization Temp | 117 | 117 |
| Crystallization Enthalpy | -211 | - |
| Melting Temp | 135 | 133. |
| Melting Enthalpy | 216. | 221. |
| Density | 0.95 | 0.95 |

The tapes were processed at the same conditins. Extrusion zone temperatures were 330/330/430/450/470/470°F moving from the extruder feedthroat to the die. The first three temperatures ure the extruder barrel, the fourth is the adapter and screen pack, the fifth piping to the die and the sixth is the die temperature. Die gap was set at 15 mils. The melt was quenched in a water bath set at 100°F, with the air gap between the die exit and the water set at 0.5 inches. The quenched sheet was pulled from the water at 60 ft/min by the nip rolls and godets upstream of the oven entrance. This first group of godets was kept at ambient temperature. Solid state stretching was performed with the oven was set ai three different temperatures; the temperatures were 190°F, 235°F, and 275°F. Godets after the drawing oven are combined in two discrete groups: Group #2 and Group #3. Group #2 was set at the fastest drawing speed and controlled the tape draw ratio. Group #3 was set at a speed. 3% slower than Group #2 to allow some relaxation. Both groups of godets had temperatures set at 194°F. Extruder speed was adjusted at various draw ratios to maintain a 1000 denier linear density for the tapes.

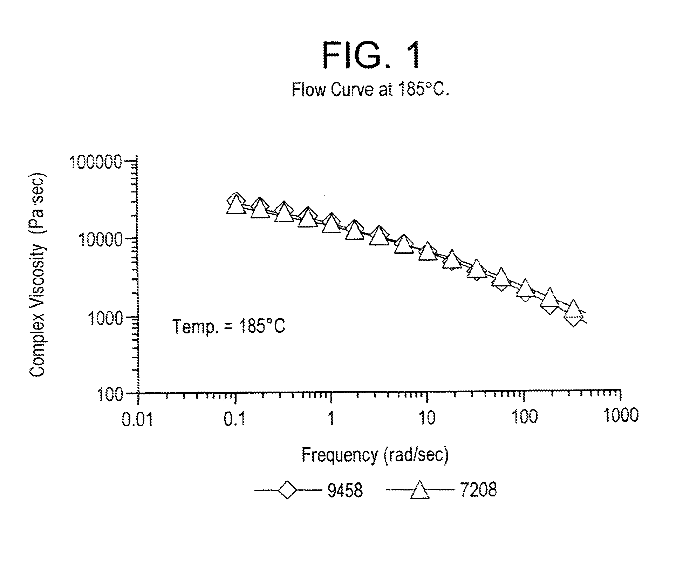

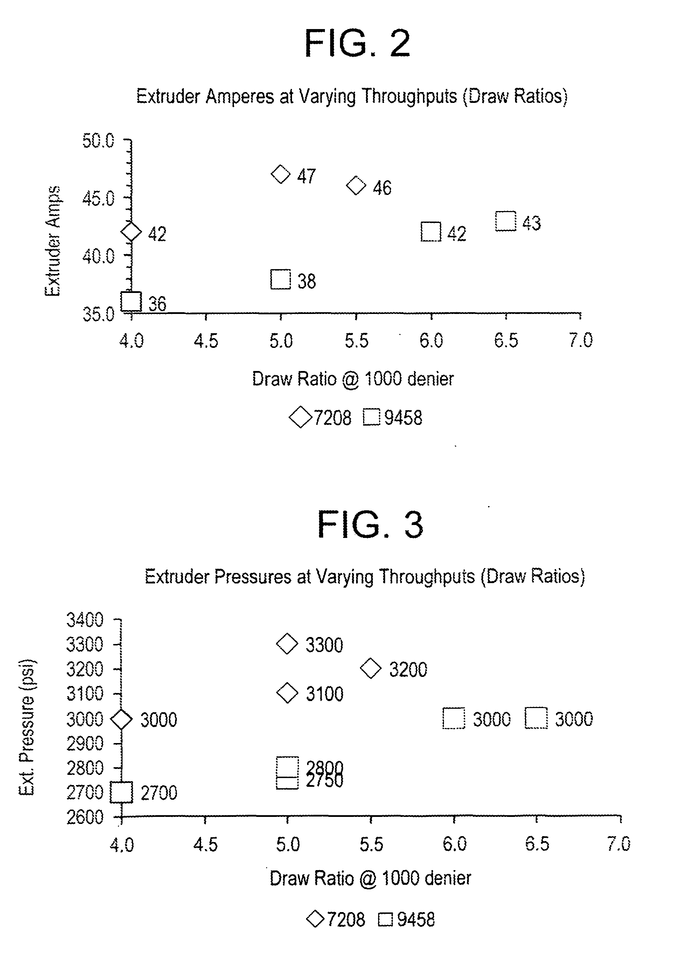

One advantage of 9458 is its superior melt processing behavior. It is more shear thinning, as shown by the shear response. The shear thinning is illustrated in Fig. 1, where 9458 is less viscous than 7208 at >10/sec shear rates. Extrusion improvements were noticed both in extrusion amperes and extrusion pressures, 9458 ran with lower amperes and pressures than 7208 ( Fig. 2 and Fig.3). This reduction offers the potential to extrude at higher rates for lines that are pressure or motor ampere limited.

Note that Fig. 2 and Fig. 3 are presented in terms of draw ratio. All tapes were made at a constant linear density of 1000 denier. To achieve that target density, throughput had to be increased for a given draw ratio. So draw ratio is an indirect measure of throughput. 7208 end 9458 run at the same target denier and draw retio were being processed at the same throughput.

A second benefit 9458 offers is higher draw ratios (Table 2). Over the entire oven temperature range studied, 9458 consistently could be drawn more than 7208. This offers the potential for higher rates. Tapes are produced at a target denier. If resin can be drawn more, throughput can be raised. Raising the maximum draw ratio from 5 to 6 is equivalent to achieving a 20% increase in throughput Such an increase is desirable for maximizing productivity.

**Table 2 Maximum draw ratio at various drawing oven temperatures. Tape Denier = 1000**

| **Resi** | **7208** | **9458** |
|---|---|---|
| Max. DR @ 190°F Oven | 5.0 | 6.0 |
| Max. DR @ 235°F Oven | 5.5 | 6.5 |
| Max. DR @ 275°F Oven | 5.0 | 6.0 |

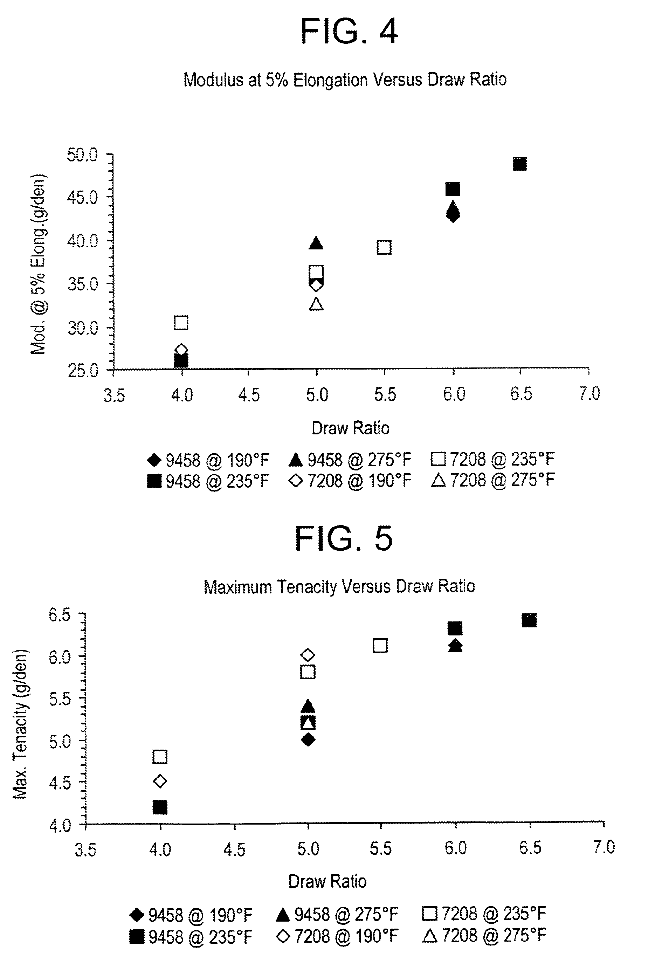

A third benefit 9458 offers is greater stiffness (Fig. 4) Tape stiffness is similar between 7208 and 9458 at a given draw ratio. Since 9458 can reach higher draw ratios, it is able to produce a stiffer tape. Increased sttiffness provides opportunities for downgauging in film applications. Film rigidity helps print registration, die cutting, and label dispensing. High modulus monofilament and tape helps create a stiffer woven structure.

Another benefit of 9458 is the ability to each slightly higher tenacities. The best tensile strength for 9458 was 6.4 g/denier, versus 6.1 g/denier for 7208 ( Fig. 5) Both of these tapes were stretched at 235°F. When drawn at 275°F, 9458 reached a 6.1 g/denier tenacity while the best for 7208 was 5.2 g/denier When stretched to their respective limits. 9458 consistently performed as well as or better than 7208

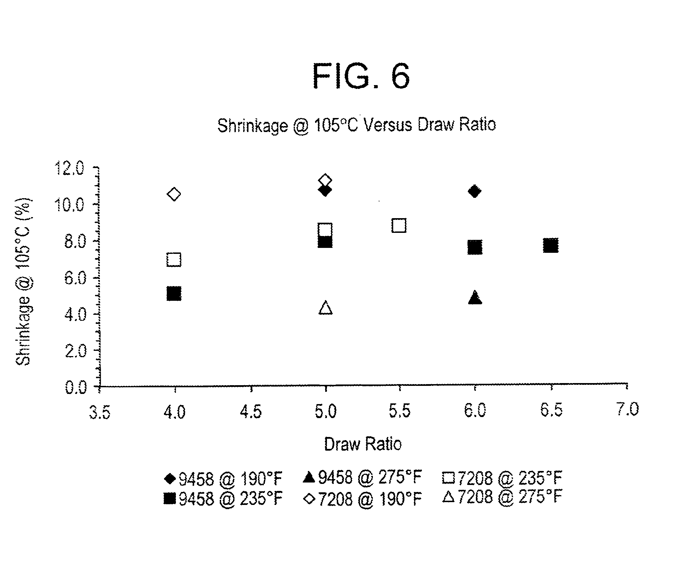

A final benefit of 9458 is lower shrinkage (Fig. 6). At 190°F, the highest draw ratio 7208 had 11.2% shrinkage while the highest draw ration 9458 was at 10.7%. At 235°C 7208 was at 8.7% while 9458 was 7.6% The trehd was only broken at 275°F. The highest draw ratio 7208 shrank at 4.3% while 9458 shrank at 4.8% The general trend is that 9458 would shrink less than 7208, even when 9458 was stretched to a higher draw ration.

A surprising result is that 9458 provides lower shrinkage even though it has more high molecular weight species. This behavior can be attributed to melting behavior. Although they have the same density, 9458 has a broader melting endotherm shifted to slightly lower temperatures. This combination is thought to contribute to having lower shrinkage in oriented structures such as tape.

## Claims

1. A solid state stretched film comprising polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less and wherein said solid state stretched film is one that has been oriented in at least one direction subsequent to at least a quenching and a casting/extruding step.

2. The film of claim 1, wherein said polyethylene is disposed in one of a plurality of layers.

3. The film of claim 1, wherein the film is monoaxially oriented.

4. The film of claim 1, wherein the polyethylene molecular weight is 250,000 g/mol or less; or the film of claim 1, wherein the polyethylene molecular weight is 200,000 g/mol or less.

5. The film of claim 1, wherein the polyethylene molecular weight distribution is between 10 and 20; or the film of claim 1, wherein the polyethylene melt flow index is between 0.20 dg/min and 0.50 dg/min.

6. The film of claim 1, wherein the polyethylene is substantially free of cavitations caused by calcium carbonate or any other cavitating agent; or the film of claim 1, wherein the polyethylene is substantially free of crosslinkages; or the film of claim 1, wherein the polyethylene is substantially free of hydrocarbon wax.

7. A solid state stretched film comprising a layer made from polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less and wherein said solid state stretched film is one that has been oriented in at least one direction subsequent to at least a quenching and a casting/extruding step.

8. The film of claim 7, wherein the film is biaxially oriented; or the film of claim 7, wherein the film is monoaxially oriented.

9. The film of claim 7, wherein the polyethylene molecular weight is 250,000 g/mol or less; or the film of claim 7, wherein the polyethylene molecular weight is 200,000 g/mol or less.

10. The film of claim 7, wherein the polyethylene molecular weight distribution is between 10 and 20; or the film of claim 7, wherein the polyethylene melt flow index is between 0.20 dg/min and 0.50 dg/min.

11. The film of claim 7, wherein the polyethylene layer is substantially free of cavitations caused by calcium carbonate or any other cavitating agent; or the film of claim 7, wherein the polyethylene layer is substantially free of crosslinkages; or the film of claim 7, wherein the polyethylene is substantially free of hydrocarbon wax.

12. A tape or filament prepared from the film of claim 1.

13. A tape or filament prepared from the film of claim 7.

14. A process for producing a solid state stretched, oriented film comprising:
preparing a masterbatch comprising polyethylene having a density ranging from greater than 0.940 g/cc to less than 0.960 g/cc; a molecular weight distribution (Mw/Mn) 10 or greater; a melt flow index ranging from 0.30 dg/min to 1.00 dg/min; and a weight average molecular weight (Mw) of 300,000 g/mol or less;
heating and extruding the polymer melt in one direction to form a film; and then stretching the film using heat to thereby orient the film in the same direction and wherein extruding the polymer melt in one direction to form a film comprises at least a quenching and a casting/extruding step.

15. The process of claim 14, wherein the film comprises two or more layers.

16. The process of claim 14 further comprising orienting the film in the opposite direction thereby obtaining a biaxially oriented film.

17. The process of claim 14, wherein the polyethylene molecular weight is 250,000 g/mol or less; or the process of claim 14, wherein the polyethylene molecular weight is 200,000 g/mol or less.

18. The process of claim 14, wherein the polyethylene molecular weight distribution is between 10 and 20; or the process of claim 14, wherein the polyethylene melt flow index is between 0.20 dg/min and 0.50 dg/min.

19. Tthe process of claim 14, wherein the masterbatch is substantially free of calcium carbonate; or the process of claim 14, wherein the masterbatch is substantially free of polymerizable monomer; or the process of claim 14, wherein the masterbatch is substantially free of hydrocarbon wax.

## Patentansprüche

1. Festkörper-Stretchfolie, umfassend Polyethylen mit einer Dichte im Bereich von mehr als 0,940 g/cm³ bis weniger als 0,960 g/cm³; einer Molekulargewichtsverteilung (Mw/Mn) von 10 oder höher; einem Schmelzflussindex im Bereich von 0,30 dg/min bis 1,00 dg/min; und einem gewichtsgemittelten Molekulargewicht (Mw) von 300.000 g/mol oder weniger, und wobei die Festkörper-Stretchfolie eine ist, die nach zumindest einem Quench- und einem Gieß-/Extrudierschritt in zumindest eine Richtung ausgerichtet wurde.

2. Folie nach Anspruch 1, wobei das Polyethylen in einer von einer Vielzahl von Schichten angeordnet ist.

3. Folie nach Anspruch 1, wobei die Folie monoaxial ausgerichtet ist.

4. Folie nach Anspruch 1, wobei das Molekulargewicht des Polyethylens 250.000 g/mol oder weniger beträgt; oder Folie nach Anspruch 1, wobei das Molekulargewicht des Polyethylens 200.000 g/mol oder weniger beträgt.

5. Folie nach Anspruch 1, wobei die Molekulargewichtsverteilung des Polyethylens zwischen 10 und 20 liegt; oder Folie nach Anspruch 1, wobei der Schmelzflussindex des Polyethylens zwischen 0,20 dg/min und 0,50 dg/min liegt.

6. Folie nach Anspruch 1, wobei das Polyethylen im Wesentlichen frei von Kavitationen ist, die durch Calciumcarbonat oder ein beliebiges anderes kavitationsbildenden Mittel verursacht sind; oder Folie nach Anspruch 1, wobei das Polyethylen im Wesentlichen frei von Vernetzungen ist; oder Folie nach Anspruch 1, wobei das Polyethylen im Wesentlichen frei von Kohlenwasserstoffwachs ist.

7. Festkörper-Stretchfolie, umfassend eine Schicht aus Polyethylen mit einer Dichte im Bereich von mehr als 0,940 g/cm³ bis weniger als 0,960 g/cm³; einer Molekulargewichtsverteilung (Mw/Mn) von 10 oder höher; einem Schmelzflussindex im Bereich von 0,30 dg/min bis 1,00 dg/min; und einem gewichtsgemittelten Molekulargewicht (Mw) von 300.000 g/mol oder weniger, und wobei die Festkörper-Stretchfolie eine ist, die nach zumindest einem Quench- und einem Gieß-/Extrudierschritt in zumindest eine Richtung ausgerichtet wurde.

8. Folie nach Anspruch 7, wobei die Folie biaxial ausgerichtet ist; oder Folie nach Anspruch 7, wobei die Folie monoaxial ausgerichtet ist.

9. Folie nach Anspruch 7, wobei das Molekulargewicht des Polyethylens 250.000 g/mol oder weniger beträgt; oder Folie nach Anspruch 7, wobei das Molekulargewicht des Polyethylens 200.000 g/mol oder weniger beträgt.

10. Folie nach Anspruch 7, wobei die Molekulargewichtsverteilung des Polyethylens zwischen 10 und 20 liegt; oder Folie nach Anspruch 7, wobei der Schmelzflussindex des Polyethylens zwischen 0,20 dg/min und 0,50 dg/min liegt.

11. Folie nach Anspruch 7, wobei die Polyethylenschicht im Wesentlichen frei von Kavitationen ist, die durch Calciumcarbonat oder ein beliebiges anderes kavitationsbildenden Mittel verursacht sind; oder Folie nach Anspruch 7, wobei die Polyethylenschicht im Wesentlichen frei von Vernetzungen ist; oder Folie nach Anspruch 7, wobei das Polyethylen im Wesentlichen frei von Kohlenwasserstoffwachs ist.

12. Band oder Filament, das aus der Folie nach Anspruch 1 hergestellt ist.

13. Band oder Filament, das aus der Folie nach Anspruch 7 hergestellt ist.

14. Verfahren zum Herstellen einer ausgerichteten Festkörper-Stretchfolie, umfassend:
Herstellen eines Masterbatch, der Polyethylen mit einer Dichte im Bereich von mehr als 0,940 g/cm³ bis weniger als 0,960 g/cm³; einer Molekulargewichtsverteilung (Mw/Mn) von 10 oder höher; einem Schmelzflussindex im Bereich von 0,30 dg/min bis 1,00 dg/min; und einem gewichtsgemittelten Molekulargewicht (Mw) von 300.000 g/mol oder weniger umfasst;
Erhitzen und Extrudieren des in eine Richtung geschmolzenen Polymers, um eine Folie zu bilden; und danach Dehnen der Folie unter Verwendung von Hitze, um die Folie dadurch in die gleiche Richtung auszurichten, und wobei das Extrudieren des in eine Richtung geschmolzenen Polymers zur Bildung einer Folie zumindest einen Quench- und einen Gieß-/Extrudierschritt umfasst.

15. Verfahren nach Anspruch 14, wobei die Folie zwei oder mehr Schichten umfasst.

16. Verfahren nach Anspruch 14, ferner umfassend das Ausrichten der Folie in die entgegengesetzte Richtung, um dadurch eine biaxial ausgerichtete Folie zu erhalten.

17. Verfahren nach Anspruch 14, wobei das Molekulargewicht des Polyethylens 250.000 g/mol oder weniger beträgt; oder Verfahren nach Anspruch 14, wobei das Molekulargewicht des Polyethylens 200.000 g/mol oder weniger beträgt.

18. Verfahren nach Anspruch 14, wobei die Molekulargewichtsverteilung des Polyethylens zwischen 10 und 20 liegt; oder Verfahren nach Anspruch 14, wobei der Schmelzflussindex des Polyethylens zwischen 0,20 dg/min und 0,50 dg/min liegt.

19. Verfahren nach Anspruch 14, wobei der Masterbatch im Wesentlichen frei von Calciumcarbonat ist; oder Verfahren nach Anspruch 14, wobei der Masterbatch im Wesentlichen frei von polymerisierbarem Monomer ist; oder Verfahren nach Anspruch 14, wobei der Masterbatch im Wesentlichen frei von Kohlenwasserstoffwachs ist.

## Revendications

1. Film étiré à l'état solide comprenant du polyéthylène ayant une masse volumique dans la plage de plus de 0,940 g/cm³ à moins de 0,960 g/cm³ ; une distribution de poids moléculaire (Mw/Mn) de 10 ou plus ; un indice de fluage dans la plage de 0,30 dg/min à 1,00 dg/min ; et un poids moléculaire moyen en poids (Mw) de 300 000 g/mole ou moins et ledit film étiré à l'état solide étant un film qui a été orienté dans au moins une direction consécutivement à au moins une étape de refroidissement et une étape de coulée/extrusion.

2. Film de la revendication 1, dans lequel ledit polyéthylène est disposé dans l'une d'une pluralité de couches.

3. Film de la revendication 1, dans lequel le film est orienté de façon monoaxiale.

4. Film de la revendication 1, dans lequel le poids moléculaire du polyéthylène est de 250 000 g/mole ou moins ; ou film de la revendication 1, dans lequel le poids moléculaire du polyéthylène est de 200 000 g/mole ou moins.

5. Film de la revendication 1, dans lequel la distribution de poids moléculaire du polyéthylène est compris entre 10 et 20 ; ou film de la revendication 1, dans lequel l'indice de fluage du polyéthylène est compris entre 0,20 dg/min et 0,50 dg/min.

6. Film de la revendication 1, dans lequel le polyéthylène est sensiblement dépourvu de cavitations causées par le carbonate de calcium ou un autre agent de cavitation ; ou film de la revendication 1, dans lequel le polyéthylène est sensiblement dépourvu de réticulations ; ou film de la revendication 1, dans lequel le polyéthylène est sensiblement dépourvu de cire paraffine.

7. Film étiré à l'état solide comprenant une couche constituée de polyéthylène ayant une masse volumique dans la plage de plus de 0,940 g/cm³ à moins de 0,960 g/cm³ ; une distribution de poids moléculaire (Mw/Mn) de 10 ou plus ; un indice de fluage dans la plage de 0,30 dg/min à 1,00 dg/min ; et un poids moléculaire moyen en poids (Mw) de 300 000 g/mole ou moins et ledit film étiré à l'état solide étant un film qui a été orienté dans au moins une direction consécutivement à au moins une étape de refroidissement et une étape de coulée/extrusion.

8. Film de la revendication 7, le film étant orienté de façon biaxiale ; ou film de la revendication 7, le film étant orienté de façon monoaxiale.

9. Film de la revendication 7, dans lequel le poids moléculaire du polyéthylène est de 250 000 g/mole ou moins ; ou film de la revendication 7, dans lequel le poids moléculaire du polyéthylène est de 200 000 g/mole ou moins.

10. Film de la revendication 7, dans lequel la distribution de poids moléculaire du polyéthylène est compris entre 10 et 20 ; ou film de la revendication 7, dans lequel l'indice de fluage du polyéthylène est compris entre 0,20 dg/min et 0,50 dg/min.

11. Film de la revendication 7, dans lequel la couche de polyéthylène est sensiblement dépourvue de cavitations causées par le carbonate de calcium ou un autre agent de cavitation ; ou film de la revendication 7, dans lequel la couche de polyéthylène est sensiblement dépourvue de réticulations ; ou film de la revendication 7, dans lequel la coche de polyéthylène est sensiblement dépourvue de cire paraffine.

12. Bande ou filament préparé à partir du film de la revendication 1.

13. Bande ou filament préparé à partir du film de la revendication 7.

14. Procédé pour produire un film orienté à l'état solide comprenant :
la préparation d'un mélange maître comprenant du polyéthylène ayant une masse volumique dans la plage de plus de 0,940 g/cm³ à moins de 0,960 g/cm³ ; une distribution de poids moléculaire (Mw/Mn) de 10 ou plus ; un indice de fluage dans la plage de 0,30 dg/min à 1,00 dg/min ; et un poids moléculaire moyen en poids (Mw) de 300 000 g/mole ou moins ;
le chauffage et l'extrusion du polymère fondu dans une direction pour former un film ; et ensuite l'étirage du film en utilisant la chaleur de manière à orienter le film dans la même direction et dans lequel l'extrusion du polymère fondu dans une direction pour former un film comprend au moins une étape de refroidissement et de coulée/extrusion.

15. Procédé de la revendication 14, dans lequel le film comprend deux couches ou plus.

16. Procédé de la revendication 14 comprenant en outre l'orientation du film dans la direction opposée de manière à obtenir un film orienté de façon biaxiale.

17. Procédé de la revendication 14, dans lequel le poids moléculaire du polyéthylène est de 250 000 g/mole ou moins ; ou procédé de la revendication 14, dans lequel le poids moléculaire du polyéthylène est 200 000 g/mole ou moins.

18. Procédé de la revendication 14, dans lequel la distribution de poids moléculaire du polyéthylène est comprise entre 10 et 20 ; ou procédé de la revendication 14, dans lequel l'indice de fluage du polyéthylène est compris entre 0,20 dg/min et 0,50 dg/min.

19. Procédé de la revendication 14, dans lequel le mélange maître est sensiblement dépourvu de carbonate de calcium ; ou procédé de la revendication 14, dans lequel le mélange maître est sensiblement dépourvu de monomère polymérisable ; ou procédé de la revendication 14, dans lequel le mélange maître est sensiblement dépourvu de cire paraffine.
